# EUROPEAN PATENT APPLICATION

(11) **EP 1 645 199 A1**
(43) Date of publication of application: **12.04.2006**
(21) Application number: 05109185.8
(22) Date of filing: 04.10.2005
(51) Int. Cl.: A23L 3/02, A23L 3/04

(54) **Foodstuff pasteurisation apparatus.**

(30) Priority: 05.10.2004 IT TO20040664
(71) Applicant: R.E.A. s.n.c. di Sassi e Baudin & C., 10028 Trofarello (Torino) (IT)
(72) Inventor: SASSI, STEFANO, 10024, MONCALIERI (TORINO) (IT)
(74) Representative: Robba, Pierpaolo

(57) **Abstract**

Foodstuff pasteurisation apparatus (1) comprising a pasteurisation chamber (13) inside which products are subjected to a temperature rise by letting in said chamber (13) a high temperature fluid, a cooling chamber (15) inside which said products are cooled by letting in said chamber (15) a low temperature fluid, a conveying device (6) for conveying foodstuffs through said pasteurisation chamber (13) and subsequently through said cooling chamber (15), wherein said pasteurisation chamber (13) and/or said cooling chamber (15) are in communication with at least a suction chamber (21) subjected to depression in order to suck and drain away fluids contained therein, so to avoid contamination of pasteurisation and/or cooling chambers.

## Description

### Technical field.

The present invention relates to a foodstuff pasteurisation apparatus.

More particularly, the present invention relates to an automatic foodstuff pasteurisation device comprising a tunnel structure through which products to be pasteurised proceed aligned along a conveyance line.

### Prior art.

Foodstuff pasteurisation apparatuses (such as bottle drinks, sausages, etc.) supplied with a tunnel structure, and precisely known as pasteurisation tunnels, are known from and described by, for example, EP 744,903, EP 1,198,966 and US 6,350,482.

Said pasteurisation tunnels show a modular structure made by a succession of chambers through which generally already packaged foodstuffs are conveyed by means of a conveyance line.

Tunnels known in the art are generally provided with at least one pasteurisation chamber and one cooling chamber.

Inside the pasteurisation chamber, products advancing on the conveyance line are exposed to the action of high temperature fluid jets, in such a way that temperatures of about 70 - 80°C are reached in order to destroy those agents that might affect food biological and enzymatic stability without damaging the taste or the attractiveness of said foods. Such fluid is usually water at a temperature of about 80 ― 90°C, as in the apparatuses described by EP 774,903, EP 1,198,996, or more advantageously, steam over 100°C, as in the tunnel described by US 6,350,482.

Inside the cooling chamber, foodstuffs, already pasteurised, are rapidly brought back to room temperature, generally by bringing them into contact with icy water (2 - 5°C).

Said pasteurisation tunnels can be inserted immediately downstream the production line, so that products can be subjected to the pasteurisation process in a step immediately following to the production process.

One of main problems to be solved in carrying out a pasteurisation tunnel is how to avoid that hot and cold fluid generated into, respectively, pasteurisation and cooling chamber, contaminate each other in consequence of the leakage inevitably produced at the entry and at the exit of said chambers.

Such chambers, in fact, are arranged in succession and the conveyor belt, on which products to be treated are placed, passes through them.

It is evident that the passage of hot fluid from pasteurisation chamber to the cooling one and the passage of cold fluid from the cooling one to the pasteurisation one, as undesirable consequence, reduces treatment efficiency.

A solution taken in the past to overcame the above-mentioned problem and, therefore, prevent mentioned drawbacks consists in arranging a plurality of flexible bulkhead or separation curtains which can bend as products pass through the cooling and pasteurisation chambers.

Nevertheless such a solution has turned out to be insufficient because curtains are continually opened to allow products passing on and because they easily deteriorate and rapidly lose their already poor initial efficiency.

### Description of the invention.

It is, therefore, an aim of the present invention to overcame the above-mentioned drawbacks by providing a foodstuff pasteurisation apparatus that permits to maintain the environmental conditions required inside each treatment chamber and, particularly, to avoid risk of contamination of the cooling chamber by the fluid used inside the pasteurisation chamber and vice versa.

This and further objects are attained by means of the foodstuff pasteurisation apparatus according to the invention.

Advantageously, it is possible to avoid contamination caused by fluid wastes passing from one chamber to another by means of suitable suction chambers placed along the apparatus having a tunnel structure and, more precisely, between the pasteurisation chamber and the cooling one.

In order to avoid contamination due to the entry of air coming from surroundings, corresponding suction chambers are preferably also provided at the entry and at the exit of said tunnel structure.

The apparatus according to the invention preferably will therefore comprise a first suction station, a pasteurisation station, a second suction station, a cooling station and a third suction station, said first suction station being in communication with the entry of the pasteurisation station, said second suction station being in communication with the exit of the pasteurisation station and with the entry of the cooling station and said third suction station being in communication with the exit of said cooling station.

Advantageously, each suction chamber is provided with flexible separators which act as a physical barrier to fluid leakage from one chamber to another and, at the same time, facilitate the suction of air upward thus conveying fluid wastes to the outside.

### Brief description of the Figures.

A preferred embodiment of the invention, given by way of a non limiting example, will be described more in detail below with reference to the attached drawings, where:
- Fig. 1 is a perspective view of the foodstuff pasteurisation apparatus according to the invention;
- Fig. 2 is a schematic longitudinal section of the apparatus of Figure 1;
- Fig. 3 is a partially exploded perspective view of a suction chamber of the apparatus of Fig.1 and 2.

### Description of a preferred embodiment.

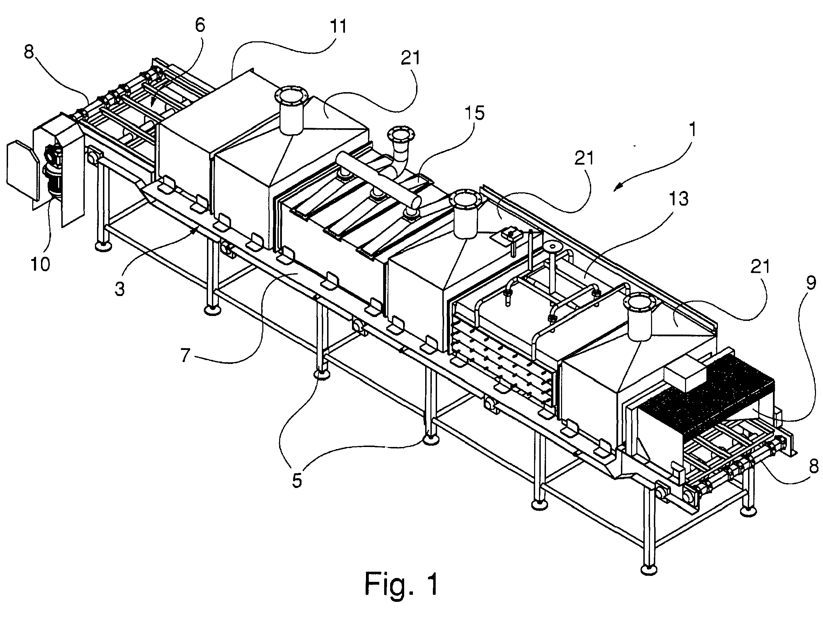

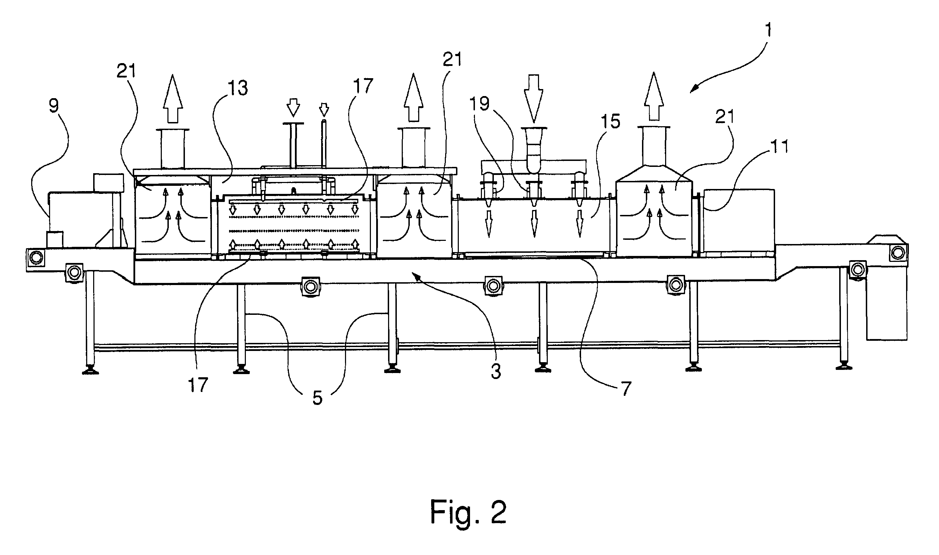

With reference to Figures 1 and 2, the foodstuff pasteurisation apparatus 1 according to the invention preferably comprises a rectilinear support structure 3 provided with a plurality of legs 5 and with an advancing plane 7 on which treatment chambers are arranged in succession in such a way that confers to the apparatus 1 a typical modular tunnel structure.

Apparatus 1 shows an inlet opening 9, through which products to be treated are brought in, and an outlet opening 11, from which product come out once treatment has been finished. A carrying device 6, for example one using a conveyor belt or a chain operated by an electric motor 10, is placed among idler rolls 8 provided at the ends of the apparatus 1.

Particularly, apparatus 1 comprises a pasteurisation chamber 13 and a cooling chamber 15 downstream thereof.

Pasteurisation chamber 13 is provided with spray nozzles 17 from which high temperature fluid jets, particularly steam over 100°C, come out and hit foodstuffs advancing through the chamber in order to destroy agents that may affect food biological and enzymatic stability.

Inside the cooling chamber 15 a plurality of diffusers 19 is arranged, from which cold filtered air flows come out, preferably at a temperature comprised between 15 and 20°C, in such a way that it allows products previously treated into the pasteurisation chamber to be cooled to a temperature close to room temperature. A gradual cooling of foods is therefore obtained while avoiding recondensation reactions that may occur in case of an excessive and too sudden fall in temperature.

Advantageously, according to a preferred embodiment of the invention, apparatus 1 comprises three suction chambers 21 subjected to depression in order to remove fluids contained therein, where a first suction chamber being placed between said chambers 13 and 15, a second suction chamber being placed at the entry of the pasteurisation chamber 13 and a third suction chamber being placed at the exit of the cooling chamber 15.

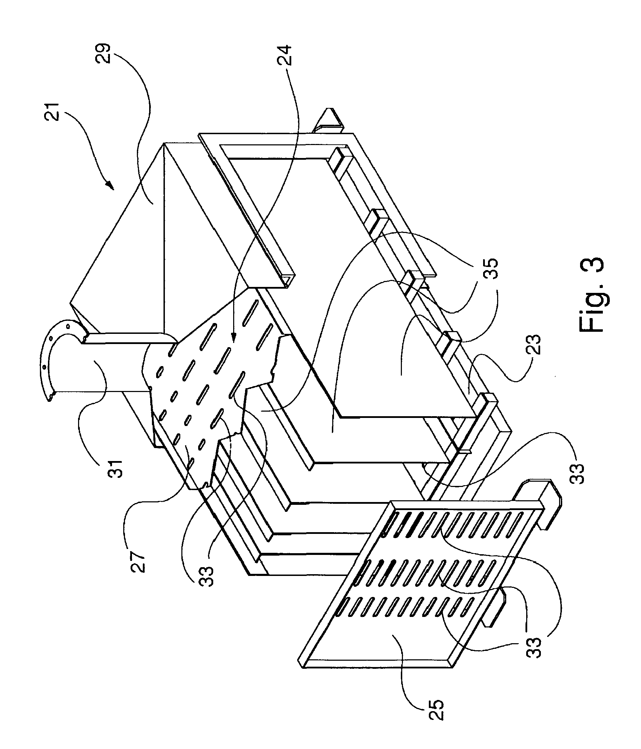

One of said suction chambers 21 is shown in detail in Figure 3.

Said suction chamber 21 comprises a lower panel 23, a couple of side panels 25, an upper panel 27 and a covering 29 which defines, together with said panels 23,25,27, a hollow space 24 which allows the passage of air.

Covering 29 is provided with an output flue 31 connected to a suction device which produces a depression inside the chamber 21 by sucking air from the hollow space 24 defined by covering 29 and panels 23,25,27.

On the whole, the air flows from chamber 21 towards hollow space 24 through side panels 25 and upper panel 27 and from the hollow space 24 towards chamber 21 through the lower panel 23; an upward air flow is thus produced providing to remove high temperature steam wastes and cold air coming from the chamber 21, while avoiding contamination of pasteurisation and cooling chambers 13 and 15, respectively.

Air sucked through the flue 31 is then expelled outside.

By means of said chamber 21, which is interposed between pasteurisation and cooling chambers 13 and 15, the passage of the fluid, respectively high and low temperature fluid, from one chamber to another is prevented. In particular, due to the presence of said suction chamber 21, it is possible to prevent that steam used inside the pasteurisation chamber 13 goes into the cooling chamber 15 and that air used inside the cooling chamber 15 carries waste impurities inside the pasteurisation chamber 13.

Thus said suction chambers 21 are real barriers against spread of fluid coming from such pasteurisation and cooling chambers.

As clearly shown by the above description, the structure of suction chambers 21 is extremely simple and easy to be manufactured. Therefore, the insertion of one or more suction chambers 21 in the apparatus 1 does not involve significant increase of costs.

Advantageously, the suction chamber 21 is further provided with a plurality of flexible separators 35, for example made of plastic or other flexible material and having a substantially plain and rectangular shape. Such separators 35 are arranged parallely one with another and perpendicularly with the advancing direction of the conveyor belt on which foodstuffs are placed and having dimensions such as to occupy the whole cross section of the chamber 21.

The top edge of said flexible separators 35 is fixed to the upper panel 27 of the chamber 21 while the bottom edge can freely swing as products are passing.

Separators 35 act as a real physical barrier to escapes of fluids or volatile substances, in such a way that they help in avoiding perturbations and contamination from one treatment chamber to another and from surroundings, and that they allow to optimise outward conveyance of fluid wastes. Such separators, thanks to their flexibility and to the fact that they have a free bottom edge, do not interfere with the products advancement.

It is clear from the above description that the apparatus according to the invention attains the set purpose since the presence of suction chambers suitably positioned allows the achievement of the physical isolation of each treatment chamber from contiguous ones and from surroundings, without obstructing the advancement of products along tunnel structure from one treatment chamber to the following one and while avoiding perturbations and contamination and allowing preservation of ideal environmental conditions.

## Claims

1. Foodstuff pasteurisation apparatus (1) comprising:
- a pasteurisation chamber (13) inside which products are subjected to a temperature rise by letting in said chamber (13) a high temperature fluid,
- a cooling chamber (15) inside which said products are cooled by letting in said chamber (15) a low temperature fluid,
- a conveying device (6) for conveying foodstuffs through said pasteurisation chamber (13) and subsequently through said cooling chamber (15),
**characterised in that** said pasteurisation chamber (13) and/or said cooling chamber (15) are in communication with at least a suction chamber (21) subjected to depression in order to suck and drain away fluids contained therein, so to avoid contamination of pasteurisation and/or cooling chambers.

2. Apparatus according to claim 1, wherein said high temperature fluid is water at a temperature over 70°C or steam at a temperature over 100°C.

3. Apparatus according to claim 1, wherein said low temperature fluid is air at a temperature of about 10°-20°C.

4. Apparatus (1) according to claim 1, wherein at least one suction chamber (21) is placed between said pasteurisation chamber (13) and said cooling chamber (15).

5. Apparatus (1) according to claim 1, wherein said suction chamber (21) comprises a lower panel (23), a couple of side panels (25), an upper panel (27) and a covering (29) provided with an output flue (31), said covering (29) defining, together with said panels (23,25,27), a hollow space (24) for the sucked air flow.

6. Apparatus (1) according to claim 5, wherein said flue (31) is further connected to a suction device which produces a depression inside the chamber (21) by sucking air from the hollow space (24) defined by covering (29) and panels (23,25,27).

7. Apparatus (1) according to claim 6, wherein the air flow sucked from the chamber (21) toward the flue (31) is directed toward the hollow space (24) through side panels (25) and upper panel (27) and from the hollow space (24) towards the suction chamber (21) through the lower panel (23), in such a way that an upward air flow is defined providing to remove high temperature steam wastes and cold air coming from the chamber (21) and avoiding contamination of pasteurisation chambers (13) and/or cooling chamber (15), respectively.

8. Apparatus (1) according to claim 5, wherein said suction chamber (21) comprises a plurality of flexible separators (35) arranged parallely one with another and perpendicularly with the advancing direction of the conveying device on which foodstuffs are placed, and having dimensions such as to substantively occupy the whole cross section of said suction chamber (21).

9. Apparatus (1) according to claim 8, wherein the top edge of said flexible separators (35) is fixed to the upper wall of said suction chamber (21) while the bottom edge can freely swing.

10. Apparatus according to claim 1, wherein a first suction chamber (21), a pasteurisation chamber (13), a second suction station (21), a cooling chamber (15) and a third suction chamber (21) are arranged in succession in the same direction of products advancing, said first suction chamber being in communication with the entry of the pasteurisation chamber (13), said second suction chamber being in communication with the exit of the pasteurisation chamber (13) and with the entry of the cooling chamber (15) and said third suction chamber being in communication with the exit of said cooling chamber (15).

11. Apparatus according to claim 10, wherein a rectilinear support structure (3) supplied with a plurality of legs (5) and an advancing plane (7) on which said suction chamber (21), pasteurisation chamber (13) and cooling chamber (15) are arranged in succession, is further provided, such apparatus (1) assuming a typical modular tunnel structure.
